# EUROPEAN PATENT APPLICATION

(11) **EP 1 229 256 A1**
(43) Date of publication of application: **07.08.2002**
(21) Application number: 02002712.4
(22) Date of filing: 06.02.2002
(51) Int. Cl.: F16B 37/12

(54) **A metal insert component**

(30) Priority: 06.02.2001 JP 2001029834
(71) Applicant: AOYAMA SEISAKUSHO CO., LTD., Nagoya-shi, Aichi-ken (JP)
(72) Inventor: Kakamu, Hideki, c/o Ohguchi Plant, Ohguchi-cho, Niwa-gun, Aichi (JP); Ito, Shuji, c/o Ohguchi Plant, Ohguchi-cho, Niwa-gun, Aichi (JP); Ichikawa, Hiroyasu, c/o Ohguchi Plant, Ohguchi-cho, Niwa-gun, Aichi (JP)
(74) Representative: Betten & Resch

(57) **Abstract**

This invention relates to a metal insert component comprising: a tubular axle portion; and a plurality of projections formed on an external peripheral surface of the tubular axle portion; wherein the projections are located at different positions along an axial direction of the tubular axle portion.

This invention also relates to a metal insert component comprising: a tubular axle portion; and a projection formed on an external peripheral surface of the tubular axle portion; wherein the projection comprising two differently angled end portions, and the two end portions are circumferentially arranged.

## Description

### FIELD OF THE INVENTION

The present invention relates to a metal insert component to be mounted on a resin member for insuring the fastening strength of a screw and the like.

### BACKGROUND OF THE INVENTION

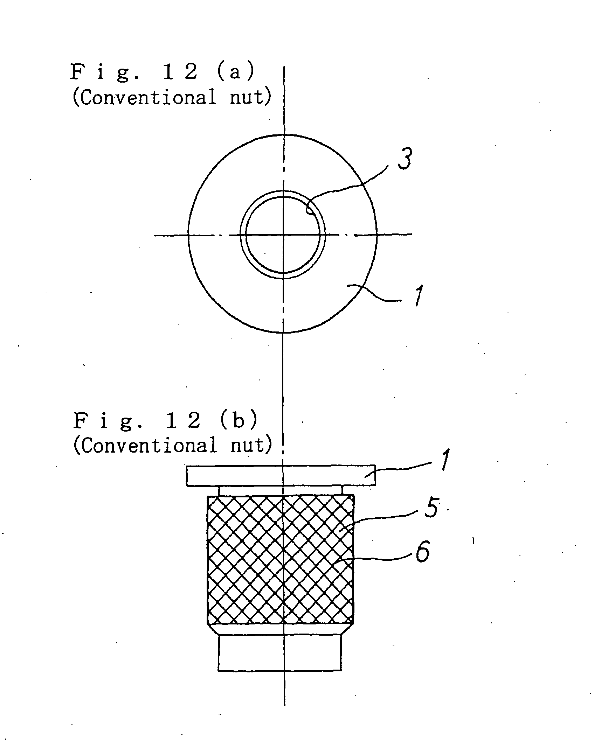

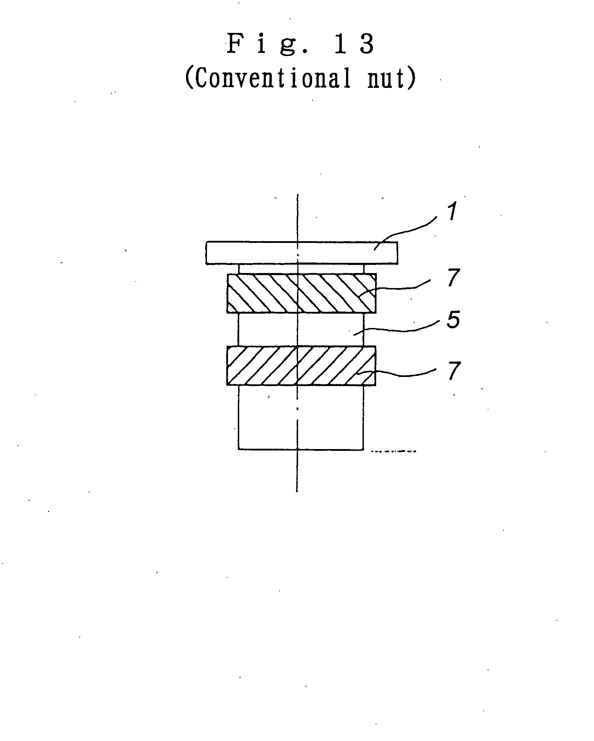

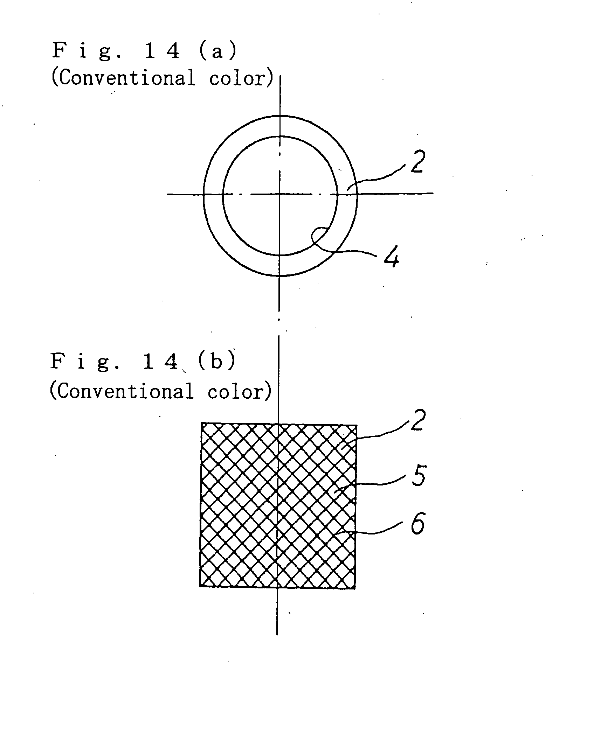

Resin is generally softer than metals and can be deformed easily. As a result, when a mounted member is attached to a resin member by means of a metal screw such as a bolt, the resin may be deformed if the screw is tightened too much, thereby failing to ensure a proper fastening strength. In order to avoid such problem, a conventional metal insert component such as a nut 1 or a collar 2 shown in Figs. 12 to 14 is mounted on the resin so that a fastening strength can be ensured. The nut 1 has a female thread 3 formed on its internal peripheral surface to engage the bolt, and the color 2 has an insertion hole 4 formed on its internal peripheral surface to insert the bolt. In these conventional insert components, asperities such as double-cut knurls 6 or a serrations 7 are formed on the external peripheral surface of an axle portion 5 in order to improve the sealing with the resin member and thereby prevent the fall or turning of the axle portion when fastened. These insert components may be attached to the resin member by simultaneously forming the insert component with the resin member, or by thermally press-inserting the insert component into the resin member. Thus, the resin can be sufficiently wedged into the concave portions of the double-cut knurls 6 or serrations 7, resulting in a high bonding strength therebetween.

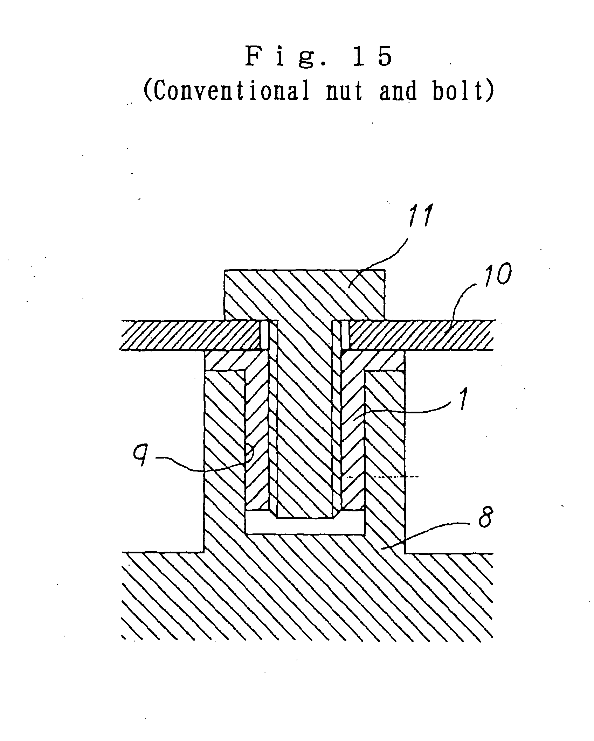

Fig. 15 shows an example of a resin member reinforced by an insert component. In this example, a nut 1 is thermally press-inserted into a boss portion 9 of a resin member 8, so that the nut 1 is tightly mounted on the resin member 8 to reinforce the boss portion 9. The use of the nut 1 can ensure that an attached member 10 can be securely attached by a bolt 11.

With the recent increase in the awareness for the protection of the earth environment and the better use of the earth's resources, it is increasingly demanded that automobile parts such as the resin member 8 and the insert component be individually reclaimed and recycled. However, the conventional insert components are not designed with a view to individually reclaim the resin member 8 and the insert component for recycling. As described above, the conventional insert component is strongly attached to the resin member 8, making the removal of the insert component difficult. Specifically, when removing the attached insert component, the insert component had to be heated up again to facilitate its removal, or the resin member 8 had to be destroyed, resulting in the increase in manufacturing steps and cost for collecting the waste automobile parts.

Furthermore, since the process for forming the double-cross knurls or the serrations is performed by a rolling die, there were required two types of machines, i.e., a forming machine such as a part former, and the rolling die. This requirement resulted in complicating the manufacturing process and raising the manufacturing costs for the insert component.

Japanese Patent No. 3045397 and Japanese Unexamined Patent Publication No. 2000-141404 disclose a method of manufacturing an insert metal fitting in which a plurality of latching projections are formed on the surface of the insert metal fitting by scooping its external surface. In this known manufacturing method, however, the plurality of latching projections are formed at identical locations on the insert metal fitting along the axial direction thereof. When the insert component is rotated in an attempt to remove it from the surrounding member so that the insert component can be recycled, the latching projections rotate relative to the surrounding member. This rotation of the latching projections causes a continuous, connected circular groove to be formed on the internal surface of the surrounding member around the rotation axis of the insert component. As a result, when the insert component is rotated, the latching projections simply move in circle within the groove, i.e., the insert component simply rotate in a free-wheeling condition. Accordingly, in order to detach the insert component from the surrounding member, a force must be compulsorily applied to the insert component axially, thus making the removal of the insert component very difficult. Furthermore, even if a force is applied to the insert component only axially so as not to cause the formation of the circular groove when removing the insert component, the force has to be extremely large, because the plurality of locking projections are wedged into the surrounding member and retaining the insert component. Thus, the insert components manufactured according to the conventional manufacturing method were not capable of being recycled and contributing to the better use of the resources.

### SUMMARY OF THE INVENTION

The present invention has been achieved to solve the above-described problems of the conventional insert component and to provide an improved insert component that can be manufactured by a single machine and which easily renders itself to individual reclamation from the resin member.

The insert component according to the present invention which has been achieved to solve the above problems is characterized in that a plurality of projections are formed at different positions along an axial direction of a tubular axle portion.

More specifically, the present invention provides:
a metal insert component comprising: a tubular axle portion; and a plurality of projections formed on an external peripheral surface of the tubular axle portion; wherein the projections are located at different positions along an axial direction of the tubular axle portion.

The provision of "a plurality of projections" provided "at different positions along an axial direction" increases a resistance between the axle portion and a surrounding member around the axle portion, and helps to prevent the rotation of the insert component. It also makes the formation of the groove along the rotation direction difficult, thereby enabling the insert component to be properly held.

### BRIEF DESCRIPTION OF THE DRAWINGS

Fig. 1 is a perspective view of an insert component according to a first embodiment of the present invention;
Fig. 2 shows a side elevation (a) and a plan view (b) of the insert component according to the first embodiment;
Figs. 3(a) and (b) show an enlarged perspective view and an enlarged sectional view, respectively, illustrating the process of forming grooves and small projections on the axle portion of the insert component by means of a die;
Fig. 4 is a perspective view of an insert component according to a second embodiment of the present invention;
Fig. 5 shows a side elevation (a) and a plan view (b) of the insert component according to the second embodiment of the present invention;
Fig. 6 is a perspective view of an insert component according to a third embodiment of the present invention;
Fig. 7 shows a side elevation (a) and a plan view (b) of the insert component according to the third embodiment of the present invention;
Fig. 8 is a cross-sectional view taken along line C3 of Figs. 4 and 5;
Fig. 9 shows an enlarged perspective view (a) and an enlarged plan view (b) of the projection;
Fig. 10 is a cross-sectional view taken along line C4 of Figs. 6 and 7;
Fig. 11 is a partially cross-sectional view illustrating the removal of the insert component according to the present invention;
Fig. 12 shows a side elevation (a) and a plan view (b) of an example of a conventional nut;
Fig. 13 is a side elevation of another example of a conventional nut;
Fig. 14 shows a side elevation (a) and a plan view (b) of an example of a conventional collar; and
Fig. 15 is a cross-sectional view illustrating a mounted member having been fastened by a conventional nut and a conventional bolt mounted on a boss portion.

### DESCRIPTION OF THE PREFERRED EMBODIMENTS

Preferred embodiments of the present invention- will be hereafter described with reference to the attached drawings.

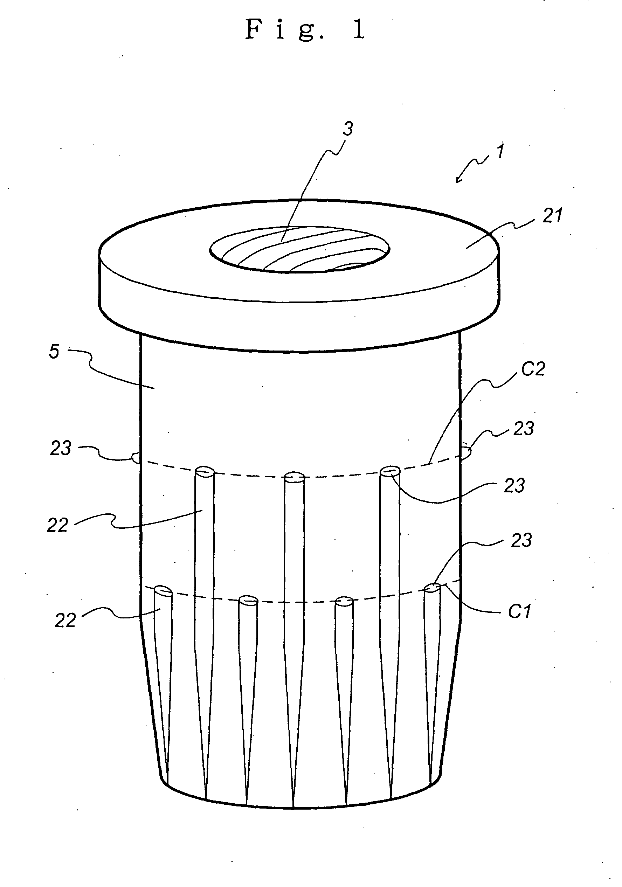

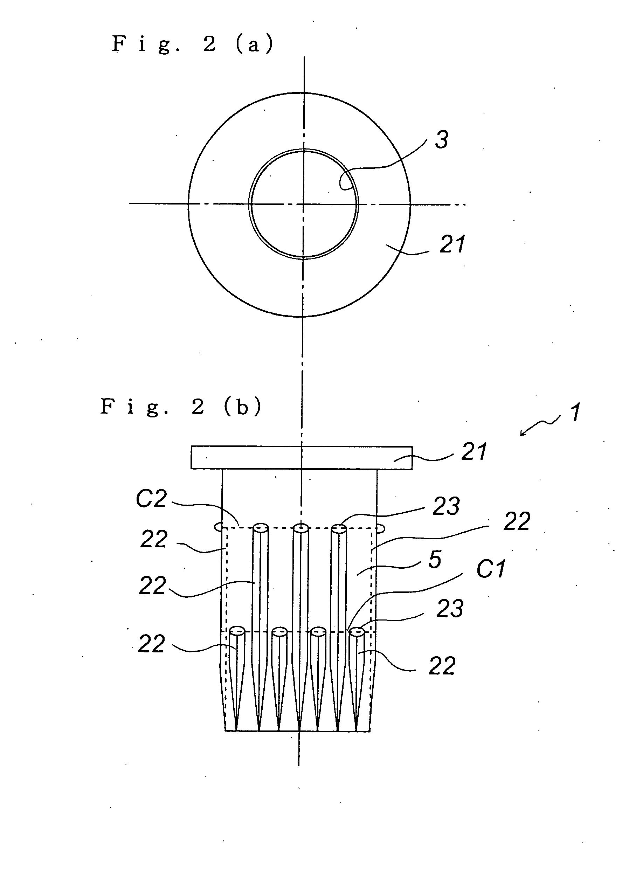

Figs. 1 and 2 show a nut 1 as an insert component according to a first embodiment of the present invention.

The nut 1 is made from a metal member and has an axle portion 5 at the top of which a circular plate-like flange 21 is formed. When the nut 1 is buried into a resin member (not shown), a lower surface of the flange 21 determines the positioning of the nut 1 with respect to the resin member. By scooping an external peripheral surface of the axle portion 5 of the nut 1 linearly upward from a lower end thereof, a plurality of grooves 22 spaced at predetermined intervals are formed on the surface of the axle portion 5. Near the end of each groove 22 is formed a projection 23 resulting from a pile of the scooped-up metal. The projections 23 are arranged on the peripheral surface of the axle portion 5 such that some are located along a circumference C1 and the rest along another circumference C2, the circumferences C1 and C2 being axially spaced from each other.

When the nut 1 is buried in the resin member and secured in place, the grooves 22 and the projections 23 engage the resin member, thereby preventing the rotation of the nut 1. At the same time, the projections 23 act to prevent the nut 1 from escaping upward.

In the example of Figs. 1 and 2, the projections 23 are provided along the circumferences C1 and C2 located at different positions along the axis of the axle portion 5. Alternatively, the projections 23 may be formed along a plurality of, i.e., more than three, circumferences along the axis.

Furthermore, while in the above-described example the grooves 22 and the projections 23 are formed on the surface of the axle portion 5 of the nut 1 as the insert component, they may alternatively be formed on a surface portion of the flange 21 of the nut 1 or on a surface portion of a collar (not shown) without a female screw 3.

As the material for the insert component, metals such as steel or aluminum alloy may be used as required.

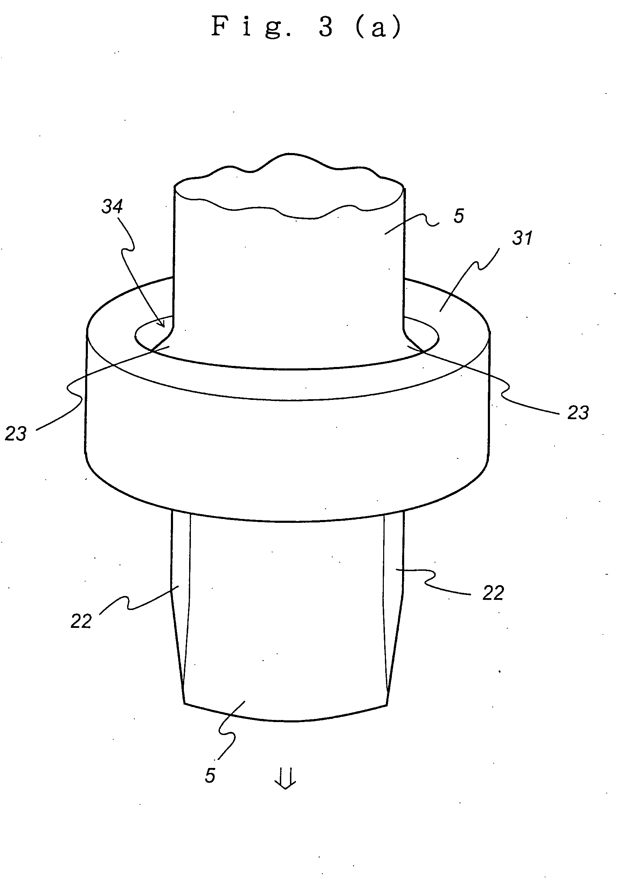

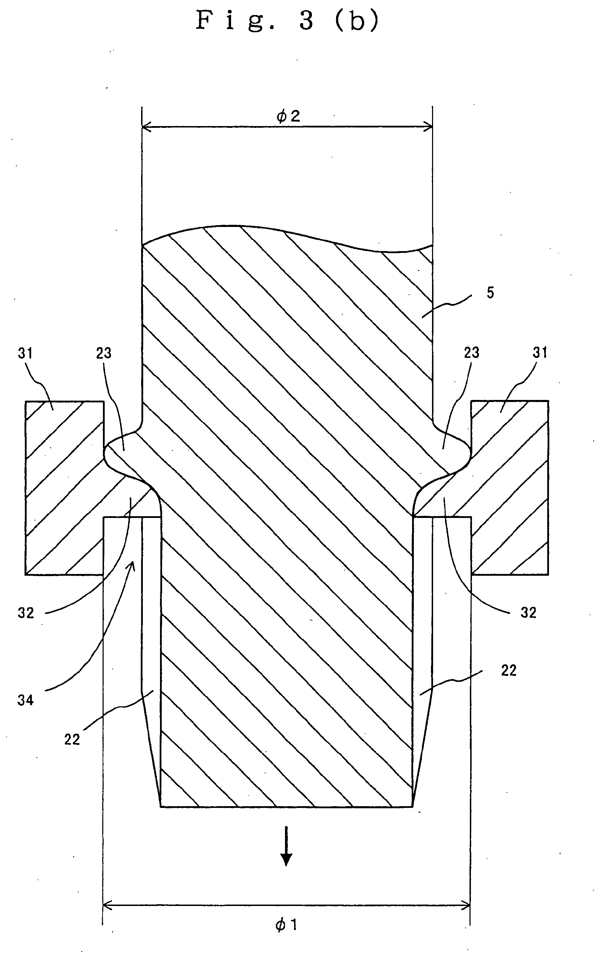

The grooves 22 and the projections 23 shown in Figs. 1 and 2 can be formed by using a die 31 with a unique shape as shown in Figs. 3(a) and (b). Specifically, the die 31 has an opening 34 formed therein, whose internal diameter φ1 is slightly larger than an external diameter φ2 of the axle portion 5 of a metal insert component. The opening 34 has a plurality of small projections 32 for the scooping on its internal peripheral surface. The die 31 is fixedly mounted to a mount member (not shown) in advance so that it can perform a press-insert process on the metal insert component.

The axle portion 5 of the metal insert component is press-inserted into the opening 34 of the die 31, with the lower end of the axle portion 5 first, in the direction of the arrow shown in Figs. 3(a) and (b). The press-insertion is performed in an impacted manner by using a forming machine such as a part former or a press machine. Although the press-insertion can be performed either by cold, warm or hot deformation, cold deformation is preferable to increase a dimensional accuracy of the insert component. By press-inserting the axle portion 5 into the opening 34 of the die 31, the metal near the surface of the axle portion 5 is plastically deformed, and the metal near the surface of the axle portion 5 which comes into contact with the small projections 32 under pressure is scooped up. After the small projections 32 pass the surface of the axle portion 5, the linear grooves 22 are formed on the surface of the axle portion 5 upward from the lower end of the axle portion 5. At the same time, the metal that was scooped up is piled up on the small projections 32, i.e., near the end of the grooves 22, and forms the projections 23.

By varying the number, shape, size and/or position of the small projections 32 of the die 31, the projections 23 and grooves 22 having necessary number, shape or size can be formed at necessary locations on the surface of the axle portion 5 of the nut 1.

Thus, unlike the conventional forming of the double-cut knurls 6 or the serrations 7, the present invention enables the grooves 22 to be formed on the insert component without requiring a rolling die in addition to a part former or a press machine. Accordingly, the grooves 22 and the projections 23 can be formed by a single processing machine in accordance with the present invention.

The insert component (1) according to the first embodiment of the present invention thus provides "a metal insert component (1) comprising: a tubular axle portion (5); and a plurality of projections (23) formed on an external periphery surface of the tubular axle portion (5); wherein the projections are located at different positions along an axial direction of the tubular axle portion (5)." Providing "a plurality of projections (23) being located at different locations along an axial direction" results in a greater resistance between the axle portion and the member surrounding the axle portion. As a result, the insert component can be prevented from rotating while helping to prevent the formation of the groove along such rotation, so that the insert component can be properly retained.

Furthermore, the insertion component according to the first embodiment provides the feature that "grooves (22) are formed on the external peripheral surface of the tubular axle portion (5) near the plurality of projections (23) along the axial direction of the tubular axle portion." Providing the "grooves (22) along the axial direction" in addition to the projections on the external peripheral surface of the axle portion makes the member surrounding the insert component come into contact with the inside of the grooves, thereby enabling the insert component to be held more securely with respect to the surrounding member.

The insert component according to the first embodiment further achieves the feature that "the grooves (22) are formed by linearly scooping the external periphery surface of the tubular axle portion (5) along the axial direction of the tubular axle portion (5), and wherein each of the projections (23) is formed from a pile of a scooped-up material at an end of each of the grooves (22)."

Since "the grooves (22) are formed by linearly scooping" the axle portion and "each of the projections (23)" is formed from a pile of a scooped-up material, the manufacturing process of the insert component can be simplified and the grooves and projections can be efficiently formed on the axle portion.

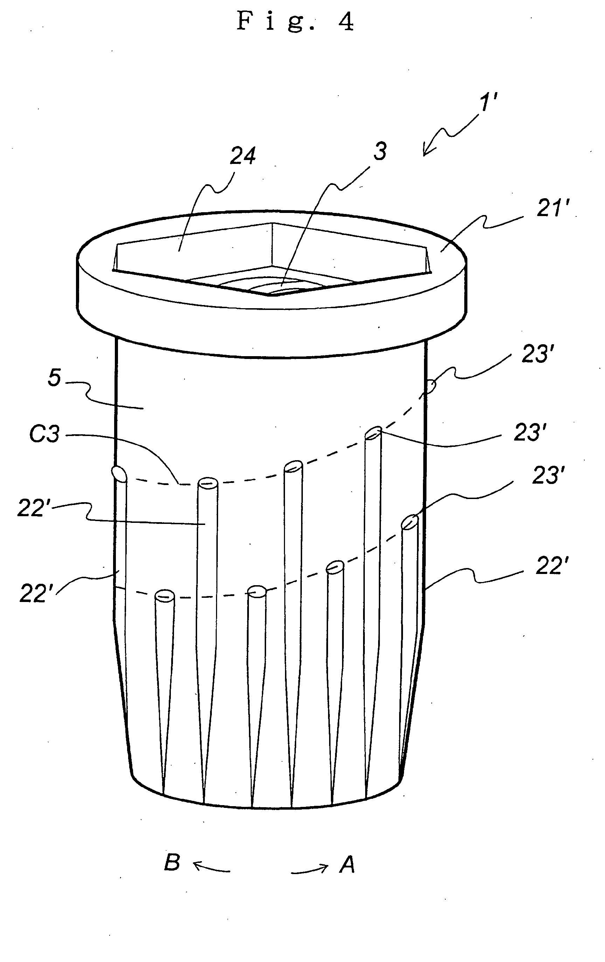

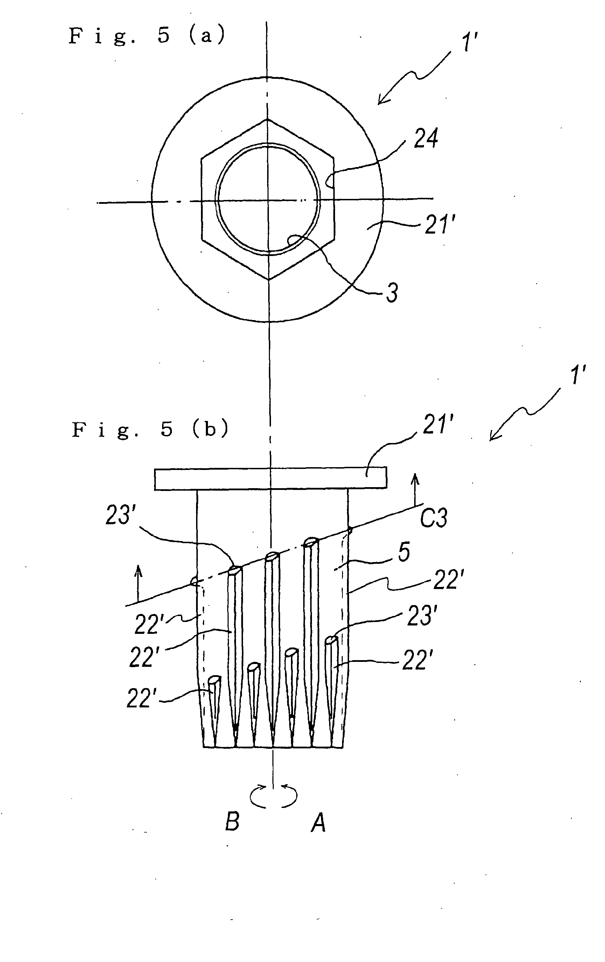

Figs. 4 and 5 show a nut 1' as an insert component according to a second embodiment of the present invention. Parts or elements similar to those of the first embodiment are referenced by similar numerals.

The nut 1' has a circular plate-like flange 21', similar to the one in the first embodiment, formed at an upper end portion of an axle portion 5. When the nut 1' is buried in a resin material (not shown), a lower surface of the flange 21' determines the positioning of the axle portion 5 with respect to the resin material. The flange 21' has a hexagonal mount hole 24 on its upper end which can fit with a detaching tool. The nut 1' can be removed from the resin material (not shown) by fitting a detaching tool such as an Allen wrench within the mount hole 24.

As in the first embodiment, the grooves 22' are formed on the external periphery surface of the axle portion 5 by scooping the metal on the external periphery surface of the axle portion 5 upward from the lower end of the axle portion 5. Also, the plurality of projections 23' are formed near the end of the grooves 22' by piling the metal thus scooped up. The plurality of projections 23' constitute a sequence of projections, which is arranged along a helical line around the external peripheral surface of the axle portion 5. As shown in Figs. 4 and 5, each of the projections 23' may be formed on the external peripheral surface of the axle portion 5 such that the length of the projection 23' lies along a helical line C3 circling around the axle portion 5.

The grooves 22' and projections 23' shown in Figs. 4 and 5 are formed by using a die like the die 31 shown in Fig. 3, as in the case of the nut 1 according to the first embodiment. In this case, however, the small projections 32 for the scooping of the metal are formed on the internal periphery surface of the opening 34 of the die 31 such that they are along a helical line circling around the central axis of the opening 34. Impact-pressing the axle portion 5 into the opening 34 of the die 31 toward the direction of the arrow in Fig. 3, with the lower end of the axle portion 5 of the material insert component first, can form the grooves 22' and the projections 23' on the external peripheral surface of the axle portion 5.

The shape of the portion with which the detaching tool is to fit may alternatively be those for fitting with a Phillips screwdriver, a flathead screwdriver, or a torque screwdriver, in addition to that of the mount hole 24 for the Allen wrench.

Thus, the insert component (1') according to the second embodiment provides "a metal insert component (1)' comprising: a tubular axle portion; and a plurality of projections (23') formed on an external periphery surface of the tubular axle portion (5), wherein the projections are located at different positions along an axial direction of the tubular axle portion (5)." Providing "a plurality of projections (23') being located at different positions along an axial direction" can also increase the resistance between the axle portion and the member surrounding the axle portion. As a result, the insert component can be prevented from rotating and the formation of the groove along the rotation direction can be prevented, making it possible to retain the insert component more securely.

Furthermore, the insert component according to the second embodiment achieves the feature that "grooves (22') are formed on the external peripheral surface of the tubular axle portion (5) near the plurality of projections (23') along the axial direction of the tubular axle portion." Providing "grooves (22') along the axial direction" as well as the projections on the external peripheral surface of the axle portion makes the surrounding member of the insert component engage with the inside of the grooves. This allows the insert component to be more securely fastened with the surrounding member.

The insert component according to the second embodiment further achieves the feature that "the grooves (22') are formed by linearly scooping the external peripheral surface of the tubular axle portion (5) along the axial direction of the tubular axle portion (5), and wherein each of the projections (23') is formed from a pile of a scooped-up material at an end portion of each of the grooves (22')." Since "the grooves (22') are formed by linearly scooping the axle portion" and "each of the projections (23')" is formed by piling the scooped-up material, the manufacturing process of the insert component can be simplified and the grooves and the projections can be efficiently formed on the axle portion.

Furthermore, the insert component according to the second embodiment provides the feature that "the plurality of projections (23') are provided on the external peripheral surface of the tubular axle portion (5) along a helical line (C3) circling around the tubular axle portion (5)." Since "the plurality of projections (23') are provided along a helical line (C3) circling around the tubular axle portion (5)," there is no possibility that a circular and continuous groove is formed on the member surrounding if the insert component should the insert component rotate for one reason or another. Thus, the insert component is prevented from rotating and can be reliably fastened with the surrounding member. In addition, when the insert component is rotated in an attempt to remove it from the surrounding member, the insert component moves upward with the projections moving along the helical line while forming a helical groove on the surrounding member. Thus, the insert component can be reliably removed from the surrounding member as required without free-wheeling therein.

The insert component according to the second embodiment further provides the feature that "a torque transmitting portion (24) for transmitting torque to the tubular axle portion (5) is provided at an axial end portion thereof." Since the "torque transmitting portion (24)" is "provided at an axial end portion", the insert component can be removed from the surrounding member with the use of a detaching tool only, without requiring special device or step for the removal. Accordingly, the work for the removal of the insert component can be simplified.

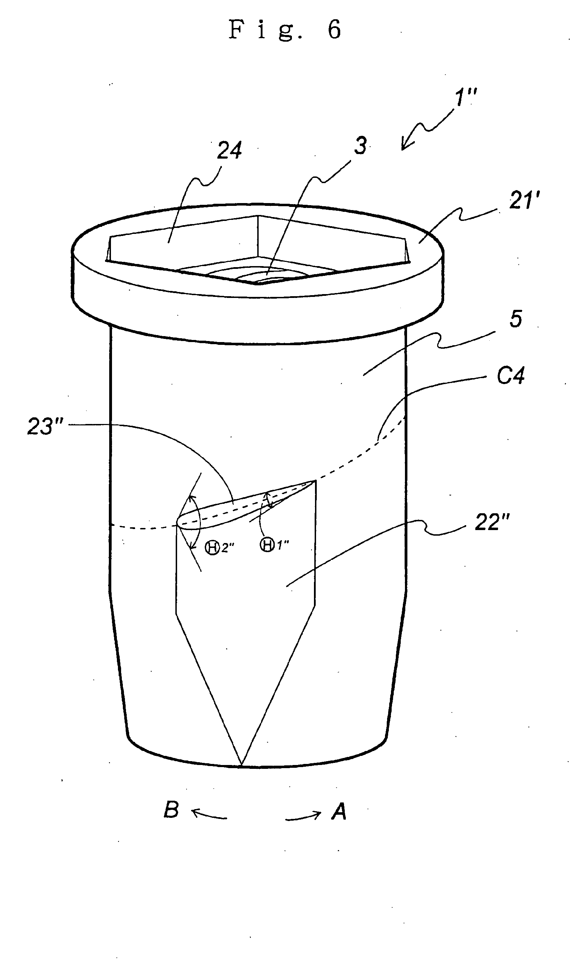

In the above description of the first and second embodiments, the plurality of projections 23 or 23' were formed on the external peripheral surface of the axle portion 5 of the nut 1 or 1' as the insert component. Alternatively, however, a single projection 23'' may be formed. Such structure is shown in Figs. 6, 7 and 10 illustrating a nut as an insert component according to a third embodiment of the present invention. In those figures, parts or elements similar to those of the first or second embodiments are referenced by similar numerals.

A nut 1'' comprises an axle portion 5 on an upper end of which a circular plate-like flange 21' is formed, similar to the one in the second embodiment. When the nut 1'' is buried in a resin material (not shown), a lower surface of the flange 21' can determine the positioning of the nut with respect to the resin material. The flange 21' has on its upper side a hexagonal mount hole 24 with which a detaching tool can fit. The nut 1'' can be removed from the resin material (not shown) by fitting the detaching tool such as an Allen wrench within the mount hole 24.

A single groove 22'' is formed on the surface of the axle portion 5 by scooping the external peripheral surface of the axle portion 5 upward from a lower end thereof. Near the end of the groove 22' is formed a single projection 23'' as the scooped-up metal is piled up there. The projection 23'' is formed on the external peripheral surface of the axle portion 5 such that the length of the projection 23'' lies along a helical line circling around the axle portion 5.

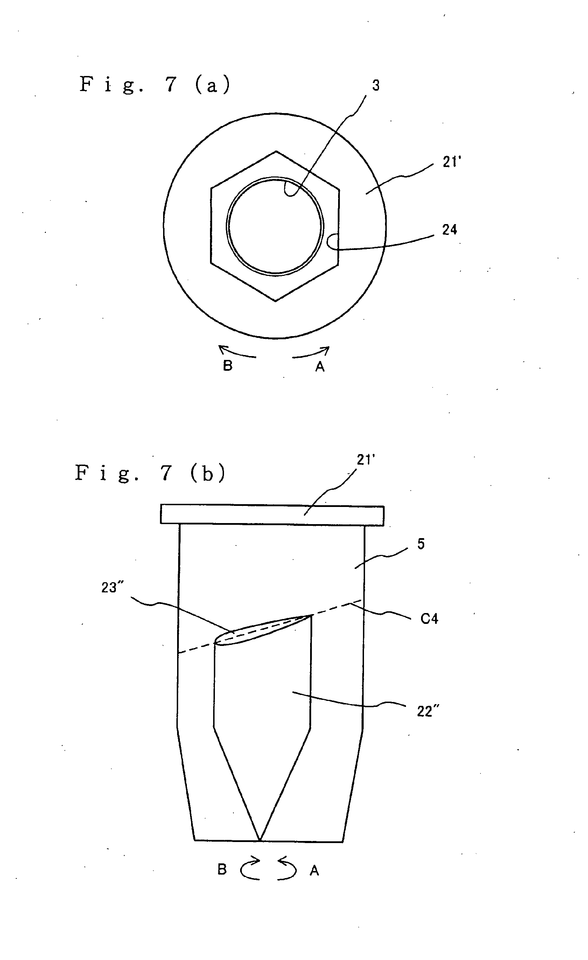

The groove 22" and projection 23'' shown in Figs. 6 and 7 can be formed on the axle portion 5 in the same manner as in the nut 1 in the first embodiment or the nut 1' in the second embodiment, i.e., by using a die 31 similar to the one shown in Fig. 3. The die 31 in this case has a single small projection 32 for the scooping up of the metal formed on the internal peripheral surface of the opening 34 of the die 31. The small projection 32 for the scooping up of the metal is arranged such that its length lies along a helical line circling about a central axis of the opening 34. Impact-pressing the axle portion 5 into the opening 34 of the die 31 in the direction of the arrow of Fig. 3, with the lower end of the axle portion 5 of a material insert component first can form the groove 22'' and projection 23'' on the external peripheral surface of the axle portion 5.

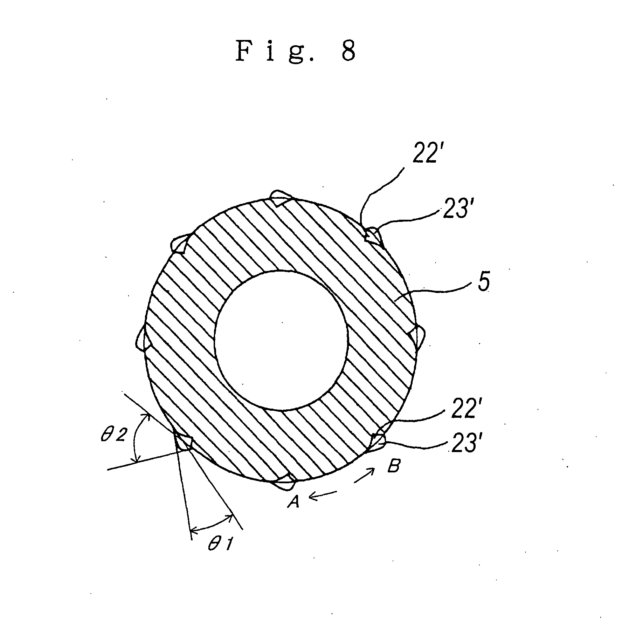

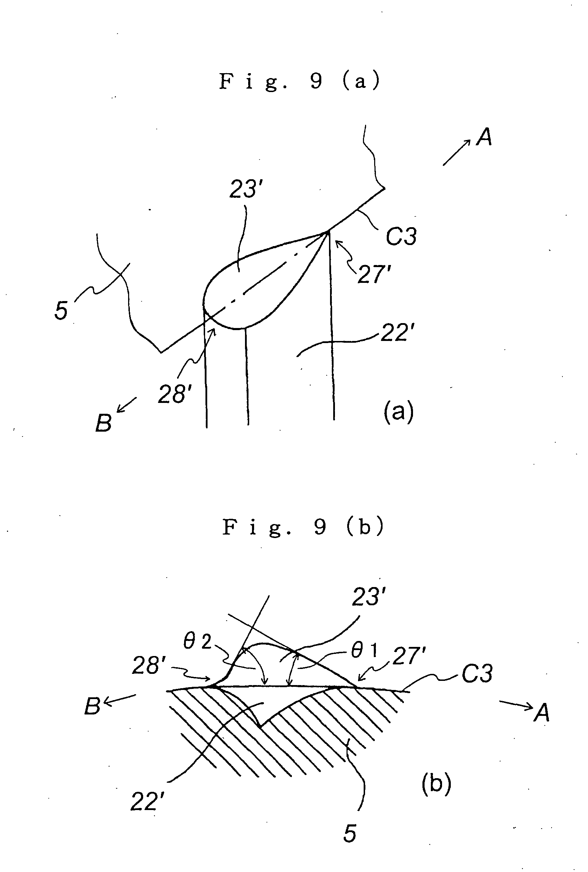

As shown in Figs. 8,9 and 10, in the second and third embodiments, the projections 23' or the projection 23'' may alternatively be formed such that end portions 27' and 28' of each projection 23' are formed with different angles, or such that end portions 27'' and 28'' of the projection 23'' are formed at different angles. Figs. 8 and 9 correspond to the second embodiment, with Fig. 8 showing a cross-section of the axle portion 5 along the helical line C3 of Figs. 4 and 5.

When the nut 1' is rotated by the detaching tool in an attempt to remove it from the resin material (not shown), the axle portion 5 also rotates. In Figs. 4, 5 and 8, the rotation direction of the nut 1' for removal is indicated by the arrow A, while the opposite direction is indicated by the arrow B.

As shown in Fig. 9(b), the projection 23' is formed such that an angle θ1 of the end portion 27' of the projection 23' toward the removal rotation direction A is smaller than an angle θ2 of the end portion 28' toward the opposite rotation direction B and such that, as shown in Fig. 9(a), its center line lies along the helical line C3.

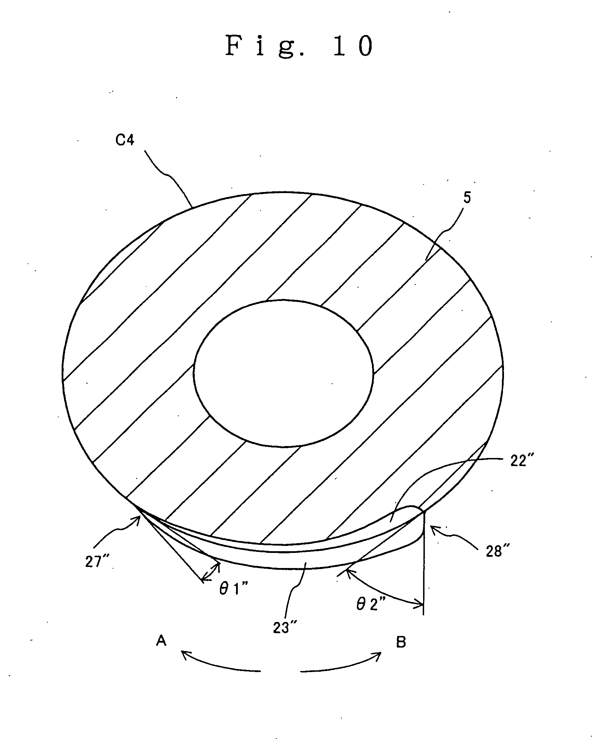

Fig. 10 corresponds to the third embodiment, showing a cross-section of the axle portion 5 along the helical line C4 of Figs. 6 and 7.

In this case, also, when the nut 1'' is rotated by the detaching tool for removal from the resin material (not shown), the axle portion 5 also rotates. In Figs. 6, 7 and 10, the direction of rotation for removing the nut 1'' is indicated by the arrow A, while the opposite direction is indicated by the arrow B.

As shown in Fig. 7(b), the projection 23'' is formed such that its center line lies along the helical line C4 and such that, as shown in Fig. 10, an angle θ1'' of the end portion 27" of the projection 23'' toward the removal rotation direction A is smaller than an angle θ2'' of the end portion 28'' toward the opposite rotation direction B.

By thus forming and disposing the projection 23'' of the axle portion 5, the projection 23'' can easily wedge into the resin member when the nut 1'' is removed therefrom. As a result, the projection 23'' can more easily form a helical groove in the resin member, so that the rotation torque required for the removal of the nut 1'' can be reduced. Also, as the projection 23'' can rotate along the helical groove thus formed in the resin member, the insert component as a whole moves upward as it rotates, thereby helping the removal of the insert component from the resin member.

The above-described projection 23' can be formed on the axle portion 5 of the nut 1 by scooping the surface of the axle portion 5 of the nut 1 such that the groove 22' corresponding to the end portion 27' is scooped shallow while scooping the groove 22' corresponding to the end portion 28' deep.

Likewise, the projection 23'' can be formed on the axle portion 5 of the nut 1'' by scooping the surface of the axle portion 5 of the nut 1'' such that the scooping of the groove 22'' corresponding to the end portion 27'' is shallow while that of the groove 22'' corresponding to the end portion 28'' is deep.

Thus, the above-described structure provides "a metal insert component comprising: a tubular axle portion (5); and a projection (23', 23'') formed on an external peripheral surface of the tubular axle portion (5); wherein the projection comprising two differently angled end portions (27' and 28', 27'' and 28''), and the two end portions are circumferentially arranged." If the projection (23', 23'') is provided such that one end (27', 27") is angled less than the other end (28', 28"), the insert component (1', 1'') can be easily rotated when the one end portion (27', 27'') leads the rotation, while the rotation of the insert component (1', 1'') is made difficult when the rotation is led by the other end portion (28', 28''). Thus, the removal direction of the insert component (1', 1'') can be easily identified. Further, the projection (23', 23'') can easily wedge into and form a helical groove in the surrounding member, so that the rotation torque required for the removal of the insert component (1', 1'') can be reduced.

The above-described structure also provides the feature that "the projection (23', 23'') is provided along a helical line (C3, C4) circling around the tubular axle portion (5)". As the projection is provided "along a helical line (C3, C4) circling around the tubular axle portion (5)," there is no possibility that a circular and continuous groove is formed in the member surrounding the insert component (1', 1'') even if the insert component is rotated for one reason or another. Thus, the insert component (1', 1'') is prevented from rotating and can be reliably fastened with the surrounding member. Furthermore, when the insert component (1', 1'') is rotated for removal from the surrounding member, the resistance force can be varied depending on the rotation direction, thus helping to identify the removal direction. At the same time, the projection moves upward along the helical line while forming a helical groove in the member surrounding the insert component (1', 1''), so that the insert component (1', 1'') can be reliably removed from the surrounding member.

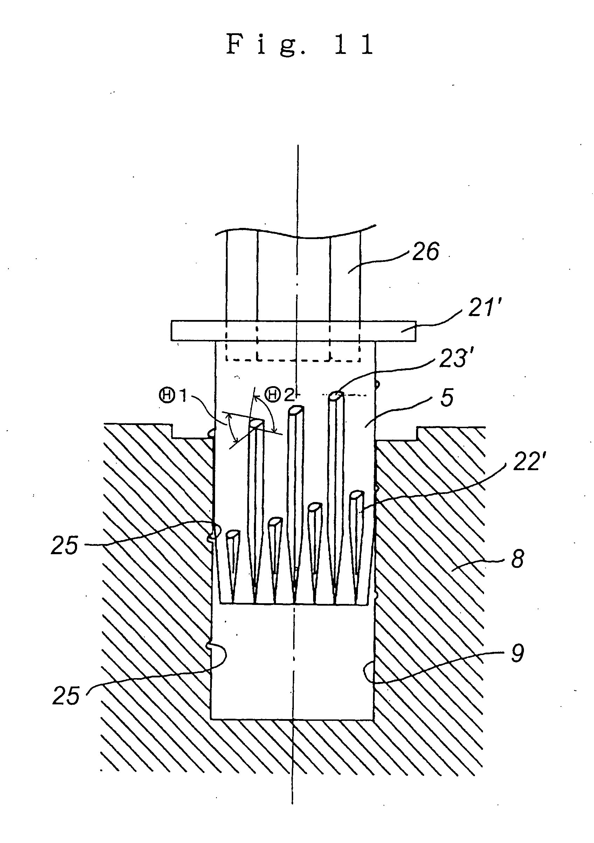

The same advantageous effect can be obtained by forming the projection 23'' such that the angle Θ1 of the end portion 27' of the projection 23' is smaller than the angle Θ2 of the end portion 28', or by forming the projection 23'' such that the angle Θ1'' of the end portion 27'' of the projection 23'' is smaller than the angle Θ2'' of the end portion 28'', as shown in Figs. 11 and 6.

In the above-described first, second and third embodiments, the thickness of the axle portion 5 of the insert component is substantially constant near the flange 21 or 21' and starts to become gradually smaller near and toward the end portion opposite the flange 21 or 21' of the flange 5. Alternatively, however, the thickness of the axle portion 5 may vary as the axle portion 5 nears the end portion. In particular, in the case where the thickness of the axle portion 5 becomes smaller from near the flange 21 or 21' toward the end portion opposite the flange 21 or 21' so that the insert component looks like a wood screw, the sliding of the axle portion 5 against the resin member can be reduced when removing the insert component from the resin member. This allows the insert component to be rotated without catching the resin member or its broken pieces during the removal of the insert component, thereby facilitating its removal.

This structure provides the feature that "a first axle end portion of the tubular axle-portion (5) along the axial direction of the tubular axle portion (5) is thinner than a second axle end portion of the tubular axle portion (5) along the axial direction". Since "a first axle end portion" is "thinner than a second axle end portion of the tubular axle portion (5) along the axial direction", the scooping up of the axle portion can be easily and reliably started when starting the scooping process from the other axle end portion. In addition, when removing the insert component from the surrounding member, the insert component can be rotated without causing the surrounding member or its broken pieces to be caught by the other axle end portion during the removal, thereby facilitating the removal of the insert component.

### INDUSTRIAL APPLICABILITY

As described above, the insert component according to the present invention has a plurality of projections formed on the external peripheral surface of the tubular axle, the projections being located at different positions along the axial direction of the axle portion. This feature prevents the insert component from being rotated and enables it to be reliably retained. Further, providing the plurality of projections along the helical line circling around the axle portion makes the insert component easily removed from the surrounding member without free-wheeling. This makes the insert component more friendly to recycling, which in turn contributes to a more effective use of the resources.

## Claims

1. A metal insert component comprising:
a tubular axle portion; and
a plurality of projections formed on an external peripheral surface of the tubular axle portion;
wherein the projections are located at different positions along an axial direction of the tubular axle portion.

2. The insert component according to Claim 1, wherein grooves are formed on the external peripheral surface of the tubular axle portion near the plurality of projections along the axial direction of the tubular axle portion.

3. The insert component according to Claim 2, wherein the grooves are formed by linearly scooping the external peripheral surface of the tubular axle portion along the axial direction of the tubular axle portion, and wherein each of the projections is formed from a pile of a scooped-up material at an end portion of each of the grooves.

4. The insert component according to Claims 1, wherein the plurality of projections are provided on the external peripheral surface of the tubular axle portion along a helical line circling around the tubular axle portion.

5. The insert component according to Claims 2, wherein the plurality of projections are provided on the external peripheral surface of the tubular axle portion along a helical line circling around the tubular axle portion.

6. The insert component according to Claims 3, wherein the plurality of projections are provided on the external peripheral surface of the tubular axle portion along a helical line circling around the tubular axle portion.

7. The insert component according to Claim 4, wherein a torque transmitting portion for transmitting torque to the tubular axle portion is provided at an axial end portion thereof.

8. The insert component according to Claim 5, wherein a torque transmitting portion for transmitting torque to the tubular axle portion is provided at an axial end portion thereof.

9. The insert component according to Claim 6, wherein a torque transmitting portion for transmitting torque to the tubular axle portion is provided at an axial end portion thereof.

10. The insert component according to Claim 3, wherein a first axle end portion of the tubular axle portion along the axial direction of the tubular axle portion is thinner than a second axle end portion of the tubular axle portion along the axial direction.

11. A metal insert component comprising:
a tubular axle portion; and
a projection formed on an external peripheral surface of the tubular axle portion;
wherein the projection comprising two differently angled end portions, and the two end portions are circumferentially arranged.

12. The insert component according to Claim 11, wherein the projection is provided along a helical line circling around the tubular axle portion.
